Europäisches Patentamt

European Patent Office

Office européen des brevets

(11) Publication number: **0 291 857**
**A2**

## (12) EUROPEAN PATENT APPLICATION

(21) Application number: **88107620.2**

(22) Date of filing: **11.05.88**

(51) Int. Cl.⁴: **C01B 3/34 , C01B 31/18**

(30) Priority: **18.05.87 US 51553**

(43) Date of publication of application:
**23.11.88 Bulletin 88/47**

(84) Designated Contracting States:
**BE DE ES FR GB IT NL**

(71) Applicant: **AIR PRODUCTS AND CHEMICALS, INC.**
**Route no. 222**
**Trexlertown Pennsylvania 18087(US)**

(72) Inventor: **Wang, Shioou-I**
**4011 Winchester Road**
**Allentown PA 18104(US)**

(74) Representative: **Dipl.-Ing. Schwabe, Dr. Dr. Sandmair, Dr. Marx**
**Stuntzstrasse 16**
**D-8000 München 80(DE)**

(54) Method of carbon monoxide production.

(57) A process is set forth for enhanced production of carbon monoxide wherein by-product carbon dioxide and hydrogen are utilized in a heat integrated reverse water gas shift reaction to provide additional carbon monoxide, and the same downstream processing and purification train is used for the treatment of the effluent of the reformation reaction and the shift reaction.

EP 0 291 857 A2

## METHOD OF CARBON MONOXIDE PRODUCTION

### TECHNICAL FIELD

The present invention is directed to the production of carbon monoxide from steam and methane. More specifically, the present invention is directed to a unique combination of steam-methane reformation and reverse water gas shift reactions to produce enhanced amounts of carbon monoxide and to utilize hydrogen by-products effectively.

### BACKGROUND OF THE PRIOR ART

The production of carbon monoxide is of growing importance in the industrial world. Traditionally, carbon monoxide is either available from natural sources or is produced from various partial oxidation or steam-methane reformations. These traditional sources of carbon monoxide generally produce the carbon monoxide as a by-product and are low recovery, low efficiency processes, when viewed from the perspective of making carbon monoxide as the predominant product.

Enhancement of carbon monoxide production has been described in U.S. Patent 4,265,868, wherein coal or liquid hydrocabons are gasified in the presence of oxygen and potentially steam, to result in a hydrogen, carbon dioxide, carbon monoxide-containing effluent, which is treated for separation of the carbon monoxide product. By-product carbon dioxide and hydrogen are reacted in the reverse water gas shift reaction in heat exchange against the effluent from the gasifier, to result in additional carbon monoxide, which enhances the overall production of carbon monoxide from the fuel fed to the gasifier. This process suffers from complex parallel separatory flow streams and high temperature carbon deposition problems of the gasifier effluent when used to heat the reverse water gas shift reaction. Additionally, it requires the use of inconvenient coal solid fuels and the attendant complex apparatus of a gasifier vessel.

U.S. Patent 3,943,236 discloses a process for making carbon monoxide using steam methane reformation with recycle of hydrogen product and carbon dioxide to the reformation zone for additional production of carbon monoxide. The process suffers from the simultaneous reaction of steam and natural gas with hydrogen and carbon dioxide, which reduces the conversion of these equilibrium reactions.

U.S. Patent 3,723,344 is directed to the production of carbon monoxide and hydrogen by partial oxidation of hydrocarbon fuel with oxygen.

U.S. Patent 3,919,114 discloses a process for producing synthesis gas from carbon monoxide and hydrogen, with residual carbon dioxide and water. The gas stream is subjected to water gas shift reaction to enhance the carbon monoxide to hydrogen ratio of the product.

U.S. Patent 3,919,113 is directed to a process for producing carbon monoxide and hydrogen by the partial oxidation of hydrocarbon fuel with oxygen and a noncatalytic reaction with carbon dioxide.

The present invention overcomes the inefficiencies of the prior art by using integrated effluent processing and reduced capital cost reaction equipment, to produce a maximum quantity of carbon monoxide for a given feed stream.

### BRIEF SUMMARY OF THE INVENTION

The present invention is a process for producing increased amounts of carbon monoxide in the reformation of methane-rich gas, comprising, reforming a methane-rich gas with steam under catalytic conditions and elevated temperature to produce a carbon monoxide-rich stream containing hydrogen, carbon dioxide and residual methane, separately forming an additional carbon monoxide-rich stream by reacting hydrogen and carbon dioxide under catalytic conditions for the reverse water gas shift reaction and at elevated temperatures using the waste heat of the reformation of the steam-methane reformation to produce a second carbon monoxide-rich stream, combining the first carbon monoxide-rich stream and the second carbon monoxide-rich stream to form a combined carbon monoxide-rich stream, quenching the combined carbon monoxide-rich stream quickly to a lower temperature to minimize carbon deposition, cooling the combined carbon monoxide-rich stream at least in part against a carbon dioxide-rich stream, separating carbon dioxide from the combined carbon monoxide-rich stream by contact with a solvent selective for sorption of carbon dioxide to result in a carbon dioxide-rich stream and a carbon dioxide-depleted, combined carbon monoxide-rich stream, chilling and drying the combined carbon monoxide-rich stream to remove residual carbon dioxide and water, separating the combined carbon monoxide-rich stream into an essentially pure carbon monoxide product, a hydrogen-rich stream and a methane-rich stream by cryogenic fractionation and combining the hydrogen-rich stream with the carbon dioxide-rich stream from the physical solvent sorption separation with additional externally supplied carbon dioxide, as necessary, and using the resulting mixed stream as the feed for the reverse water gas shift reaction.

Preferably, the reformation is performed at a steam to carbon ratio of approximately 1.45.

Preferably, the solvent separation uses monoethanolamine.

Preferably, the catalyst for the steam-methane reformation and the reverse water gas shift reaction is nickel oxide supported on alumina.


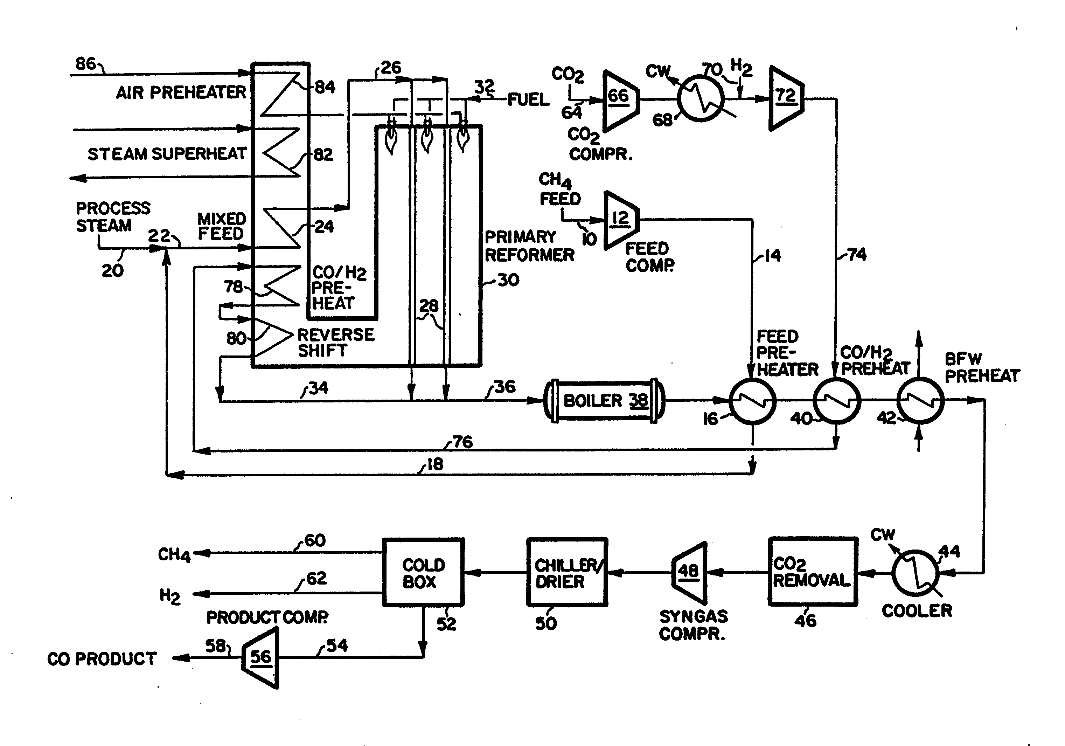

## BRIEF DESCRIPTION OF THE DRAWING


The drawing is a schematic representation of the flow scheme of the preferred embodiment to the present invention.


## DETAILED DESCRIPTION OF THE INVENTION


The present invention uses steam-methane reformation, reverse water gas shift reaction, a solvent sorption of carbon dioxide, a chiller dryer for removal of residual carbon dioxide and water and a cryogenic fractionation system for separation of hydrogen, methane and carbon monoxide to result in a carbon monoxide production in an improved manner heretofore not producing as efficient and as high a recovery of carbon monoxide based upon carbon feed to the overall process. Conventional methods of producing carbon monoxide typically make large amounts of by-product hydrogen and surplus steam. Even when the by-product hydrogen is valued at fuel value, the conventional methods for carbon monoxide production are not economical. Previous attempts to produce carbon monoxide use autothermal reformation which is expensive and produces downstream heat exchange problems and a carbon deposition operational considerations, as well as combined reaction zones for the production of carbon monoxide and duplicative separatory systems. The use of steam-methane reformation coupled with a reverse water gas shift reaction operating in indirect heat exchange with the effluent from the reformer, permits production of carbon monoxide with a minimum amount of by-product hydrogen. The present invention makes additional carbon monoxide, will effectively use by-product hydrogen and will efficiently integrate the reverse water gas shift reaction with the convection section of the steam-methane reformer to maximize waste heat recovery.

With regard to the drawing, a preferred embodiment of the present invention will now be set forth in detail. Natural gas containing methane is introduced in line 10 and compressed to 234.6 psia in compressor 12 to result in a high pressure stream 14, which is preheated to 230°F in feed preheater heat exchanger 16 for being removed in line 18 for combination with process steam in line 20, resulting in a mixed natural gas steam feed in line 22, having a steam to carbon ratio of approximately 1.45. This stream 22 is further preheated to 800°F in the convection heat exchanger 24, resulting in an elevated temperature feed 26 which is introduced into the steam-methane primary reformer 30 through nickel oxide on alumina catalyst lined reaction tubes 28, which are heated by the combustion of a fuel, such as natural gas in line 32 with air in line 86, which has been preheated in the convection zone of the reformer at 84, to produce the necessary heat of reaction in the reformer 30.

The steam-methane reaction ($CH_4 + H_2O \rightarrow CO + 3H_2$) produces a first carbon monoxide-rich stream containing hydrogen, carbon dioxide and residual methane at a temperature of 1706°F and having a hydrogen to carbon monoxide ratio of 3.6. This reformer effluent is mixed with the effluent of a reverse water gas shift reaction of hydrogen and carbon dioxide, which is catalytically formed in the convection section 80 of the steam-methane primary reformer 30 and results in a second carbon monoxide-rich stream in line 34. The combined first carbon monoxide-rich stream and the second carbon monoxide rich-stream are passed in line 36 to a waste heat boiler 38 to cool the combined stream to 550°F and to raise steam. It is critical to quickly quench the combined stream through the temperature range from approximately 1550°F to approximately 1000°F, and preferably in a waste heat boiler, in order to avoid carbon deposition out of the stream and onto process equipment, because of the high carbon monoxide content (24%) of stream 36, which deposition is caused by favorable temperatures within the above cooling range for the mechanism of the Bouduard reaction ($2CO \rightarrow C + CO_2$). For carbon monoxide streams of the general content of the present invention, the quickness of the cooling is in the order of approximately 1 second or less of residence time in the waste heat boiler, preferably less than approximately 0.5 second of residence time in the waste heat boiler. The combined stream passes through boiler 38 and three stages of cooling against warming process streams in feed preheater 16 which preheats the natural gas feed in line 14, carbon monoxide/hydrogen preheat exchanger 40 which preheats carbon dioxide and hydrogen going to the reverse water gas shift reaction and boiler feed water preheat exchanger 42 which heats water for eventual steam production. The resulting combined stream is further cooled to 100°F in cooler heat exchanger 44 against cooling water prior to introduction into a carbon dioxide removal zone 46, which uses a solvent sorption system selective for carbon dioxide, such as monoethanolamine, in a twin tower configuration with a contact zone and a scrubber to cyclically use the solvent to remove carbon dioxide and regenerate the solvent for additional duty with the production of by-product carbon dioxide as is well known in the prior art. The carbon dioxide-depleted, combined carbon monoxide-rich stream is then compressed in syngas compressor 48 to 313.4 psi prior to entering a chiller/dryer system, where any residual carbon dioxide and any contained water are removed from the stream. The carbon dioxide-depleted and dried, combined carbon monoxide-rich stream is separated in cryogenic fractionation zone 52, such as a refrigerated distillation column, to result in an essentially pure carbon monoxide product, a hydrogen-rich stream and a methane-rich stream. The methane-rich stream is removed in line 60, the hydrogen-rich stream is removed in line 62 and the carbon monoxide product is removed in line 54. The carbon monoxide product is compressed in product compressor 56 to necessary end use pressures as carbon monoxide product in line 58. Thirty-one percent of the hydrogen in line 62 is utilized as fuel to fire the steam-methane reformer 30 in line 32, while 60% is used as feed to the reverse water gas shift reaction in line 70 and the remainder is used as an export product, if a market exists.

The predominant amount of the hydrogen from line 62 is introduced in line 70 into a carbon dioxide stream, which, in part, is removed from zone 46 and, in part, is imported from outside the process, and fed in line 64 through $CO_2$ compressor 66 to a pressure of 60 psia and aftercooled in cold water heat exchanger 68, to be further compressed with the hydrogen in line 70 in compressor 72 to 234.7 psia, resulting in a carbon dioxide and hydrogen mixed gas stream in line 74. This stream in line 74 is preheated in the carbon monoxide/hydrogen preheat heat exchanger 40 to 475°F, against effluent from the various reactors of the process and is conducted in line 76 to a carbon monoxide/hydrogen preheat heat exchanger 78, in the convection zone of the steam-methane primary reformer 30 where it is heated to 900°F, before being fed as a hydrogen and carbon dioxide feed to a reverse water gas shift reaction ($CO_2 + H_2 \rightarrow CO + H_2O$) in a nickel oxide on alumina catalyzed reaction zone 80 in the convection section of the steam-methane primary reformer 30, using the waste heat from the combustion of fuel 32 and air 86 that was combusted for heat in the steam-methane primary reformer 30. Conversion of the hydrogen feed is 70% and for the carbon dioxide is 27%. The use of waste heat from the reformation 30 for the reverse water gas shift 80, provides an enhanced efficiency in the present invention, while not requiring concern over carbon deposition, due to the composition ($N_2$, $CO_2$ and $H_2O$ without CO) of the combustion products in the convection section of the reformer 30. The reverse water gas shift reaction produces additional carbon monoxide and water resulting in a second carbon monoxide rich stream having a concentration of 21% carbon monoxide. This second carbon monoxide-rich stream 34 is added to the first carbon monoxide rich stream, emanating from the catalyst tubes 28, for simultaneous downstream treatment and purification in a single treatment train in line 36.

Selected conditions of the process are set forth in Table 1 below.

## T A B L E   1
### SELECTED FLOWRATES, TEMPERATURES, AND PRESSURES
### CORRESPONDING TO THE DRAWING

| STREAM NUMBER | 10 | 26 | 28 | 44 | 48 | 54 | 62 | 60 | 64 | 70 |
|---|---|---|---|---|---|---|---|---|---|---|
| **FLOWRATE #MOLES/HR** | | | | | | | | | | |
| $H_2$ | 14.8 | 14.8 | 758.3 | 1282.5 | 1282.5 | – | 1282.5 | – | – | 740.4 |
| $CH_4$ | 281.3 | 281.3 | 42.7 | 50.1 | 50.1 | – | 12.8 | 36.6 | – | 7.4 |
| $C_2H_6$ | 0.1 | 0.1 | – | – | – | – | – | – | – | – |
| $CO$ | – | – | 211.4 | 430.0 | 430.0 | 426.6 | 3.4 | – | – | 2.5 |
| $CO_2$ | – | – | 27.4 | 107.3 | – | – | – | – | 296.2 | – |
| $H_2O$ | – | 408.0 | 142.0 | 10.2 | 10.2 | – | – | – | – | – |
| **TOTAL** | 296.2 | 704.2 | 1181.6 | 1880.0 | 1772.8 | 426.6 | 1298.7 | 36.6 | 296.2 | 750.3 |
| P,PSIA | 71.6 | 214.6 | 199.6 | 181.6 | 313.4 | 19.7 | 57.4 | 311.4 | 14.7 | 40 |
| T,°F | 70 | 800 | 1706 | 100 | 230.6 | 35 | 35 | 194.7 | 80 | 57.4 |

The present invention provides a process for producing enhanced quantities of carbon monoxide, while utilizing by-product hydrogen and carbon dioxide for this enhancement in an efficient capital and operational technique. This process of the present invention provides improvement over the prior art, such as demonstrated in U.S. Patent 4,265,868, whereby the present invention provides a recovery of carbon monoxide for carbon feed of 3.534 in comparison to the process exemplified by Example 2 and Example 3 of U.S. Patent 4,265,868, which provides a carbon monoxide for carbon feed ratio of only 3.081. Accordingly, the present invention provides an unexpectedly significant improvement over the prior art, as exemplified by U.S. Patent 4,265,868, of 15% in carbon monoxide production for carbon feed. Such an improvement in carbon monoxide recovery and productivity would be deemed significant in the art of reformation and carbon monoxide production. Such a signigicant improvement does not take into account the further significant decrease in complexity of processing and capital investment requirements that the present invention enjoys over the prior art.

Additionally it is important to conduct the steam-methane reformation separately from the reverse water gas shift reaction in order to avoid adverse effects on these to reversible equilibrium reactions, unlike the teachings of some of the prior art discussed above. By maintaining these reactions separate their respective conversion rates are maintained at a high level to provide the important overall recovery of carbon monoxide demonstrated for the present invention.

The present invention has been set forth with regard to a specific preferred embodiment. The scope of the invention should be ascertained however, from the claims which follow.

**Claims**

1. A process for producing increased amounts of carbon monoxide in the reformation of methane-rich gas, comprising:

a) reforming a methane-rich gas with steam under catalytic conditions and elevated temperature to produce a first carbon monoxide-rich stream containing hydrogen, carbon dioxide and residual methane;

b) separately forming an additional carbon monoxide-rich stream by reacting hydrogen and carbon dioxide under catalytic conditions for the reverse water gas shift reaction, and at elevated temperature using the waste heat of the reformation of step a), to produce a second carbon monoxide-rich stream;

c) combining the first carbon monoxide-rich stream and the second carbon monoxide-rich stream to form a combined carbon monoxide-rich stream;

d) quenching the combined carbon monoxide-rich stream quickly to a lower temperature to minimize carbon deposition;

e) cooling the combined carbon monoxide-rich stream at least in part against a carbon dioxide-rich stream;

f) separating carbon dioxide from the combined carbon monoxide-rich stream by contact with a solvent selective for sorption of carbon dioxide to result in a carbon dioxide-rich stream and a carbon dioxide-depleted, combined carbon monoxide-rich stream;

g) chilling and drying the combined carbon monoxide-rich stream to remove residual carbon dioxide and water;

h) separating the combined carbon monoxide-rich stream into an essentailly pure carbon monoxide product, a hydrogen-rich stream and a methane-rich stream by cryogenic fractionation; and

i) combining the hydrogen-rich stream of step h) with the carbon dioxide-rich stream of step f) with additional externally supplied carbon dioxide, as necessary, and using the resulting mixed stream as the feed of step b).

2. The process of Claim 1 wherein the reformation of step a) is performed at a steam to carbon ratio of approximately 1.45.

3. The process of Claim 1 wherein the solvent separation of step f) uses monoethanolamine.

4. The process of Claim 1 wherein the catalyst for the steam-methane reformation is nickel oxide supported on alumina.

5. The process of Claim 1 wherein the catalyst for the reverse water gas shift reaction is nickel oxide supported on alumina.

6

0 291 857